# EUROPÄISCHE PATENTANMELDUNG

(11) **EP 4 517 108 A1**
(43) Veröffentlichungstag der Anmeldung: **05.03.2025**
(21) Anmeldenummer: 24191644.4
(22) Anmeldetag: 30.07.2024
(51) Int. Cl.: F15B 11/06, F15B 11/16, F15B 21/0423, F15B 21/048

(54) **PNEUMATISCHE VERSORGUNGSEINRICHTUNG FÜR EINEN LANDWIRTSCHAFTLICHEN TRAKTOR**

(30) Priorität: 04.09.2023 DE 102023123727
(71) Anmelder: Deere & Company, Moline, IL 61265 (US)
(72) Erfinder: GAEDKER, Simon, 68163 Mannheim (DE); KNEER, Bernd, 68163 Mannheim (DE); SCHAEFER, Marc, 68163 Mannheim (DE)
(74) Vertreter: Dehnhardt, Florian Christopher

(57) **Zusammenfassung**

Pneumatische Versorgungseinrichtung (12) für einen landwirtschaftlichen Traktor (10), umfassend eine Druckluftquelle (16) zur Erzeugung eines komprimierten Luftstroms (Q_komp), einen Kühler (20) zur Kühlung des erzeugten Luftstroms (Q_komp), sowie einen mit dem gekühlten Luftstrom (Q_komp) gespeisten ersten Lufttrockner (22), über dessen Auslass (24) eine erste pneumatische Verbrauchergruppe (26) mit entfeuchteter Druckluft entsprechend einer ersten Entfeuchtungs- und Durchflussleistung beaufschlagbar ist, und einen mit dem gekühlten Luftstrom (Q_komp) gespeisten zweiten Lufttrockner (28), über dessen Auslass (30) eine zweite pneumatische Verbrauchergruppe (32) mit entfeuchteter Druckluft entsprechend einer zweiten Entfeuchtungs- und Durchflussleistung beaufschlagbar ist.

## Beschreibung

Die Erfindung betrifft eine pneumatische Versorgungseinrichtung für einen landwirtschaftlichen Traktor.

Derartige pneumatische Versorgungseinrichtungen dienen in der Regel dem Betrieb einer pneumatischen Radbremseinrichtung eines an einem landwirtschaftlichen Traktor anbringbaren Anhängers und umfassen neben einer als Kompressor ausgebildeten Druckluftquelle einen Kühler zur Kühlung der kompressionsbedingt erwärmten Druckluft sowie einen nachgeschalteten Lufttrockner zur Abscheidung des beim Abkühlen entstehenden Kondensats. Um die Funktion bzw. Lebensdauer der pneumatischen Radbremseinrichtung durch Korrosion nicht zu beeinträchtigen, werden an die Feuchtefreiheit der zugeführten Druckluft und damit an die Entfeuchtungsleistung des Lufttrockners vergleichsweise hohe Anforderungen gestellt. Um den begrenzten Bauraum im landwirtschaftlichen Traktor bestmöglich zu nutzen, wird die nominelle Durchflussleistung des Lufttrockners zugunsten einer möglichst kompakten Bauform nicht höher als notwendig gewählt. Eine (gleichzeitige) Druckluftversorgung weiterer pneumatisch betriebener Aggregate ist daher nur eingeschränkt möglich. Dies gilt vor allem dann, wenn sich diese durch einen erhöhten Druckluftverbrauch auszeichnen, wie er beispielsweise für die Verwendung einer extern über eine Druckluftkupplung anschließbaren Ausblaspistole, einer Reifendruckregelanlage oder auch pneumatisch betriebener Arbeitsaggregate von an dem landwirtschaftlichen Traktor anbringbaren Anbau- oder Zusatzgeräten typisch ist.

Angesichts dessen ist es Aufgabe der vorliegenden Erfindung, eine pneumatische Versorgungseinrichtung der eingangs genannten Art hinsichtlich ihres universellen Gebrauchs zu verbessern.

Diese Aufgabe wird durch eine pneumatische Versorgungseinrichtung für einen landwirtschaftlichen Traktor mit den Merkmalen des Patentanspruchs 1 gelöst.

Die erfindungsgemäße pneumatische Versorgungseinrichtung für einen landwirtschaftlichen Traktor umfasst eine Druckluftquelle zur Erzeugung eines komprimierten Luftstroms, einen Kühler zur Kühlung des erzeugten Luftstroms, sowie einen mit dem gekühlten Luftstrom gespeisten ersten Lufttrockner, über dessen Auslass eine erste pneumatische Verbrauchergruppe mit entfeuchteter Druckluft entsprechend einer ersten Entfeuchtungs- und Durchflussleistung beaufschlagbar ist, und einen mit dem gekühlten Luftstrom gespeisten zweiten Lufttrockner, über dessen Auslass eine zweite pneumatische Verbrauchergruppe mit entfeuchteter Druckluft entsprechend einer zweiten Entfeuchtungs- und Durchflussleistung beaufschlagbar ist.

Durch Verwendung separater Lufttrockner lässt sich den spezifischen Erfordernissen unterschiedlicher pneumatischer Verbrauchergruppen hinsichtlich des zulässigen Feuchtegehalts der zugeführten Druckluft einerseits sowie des Druckluftverbrauchs andererseits entsprechend Rechnung tragen. Dies erlaubt einen universellen Gebrauch der pneumatischen Versorgungseinrichtung für unterschiedlichste Verbrauchertypen.

Bei der ersten pneumatischen Verbrauchergruppe kann es sich beispielsweise um eine pneumatische Radbremseinrichtung eines an dem landwirtschaftlichen Traktor anbringbaren Anhängers, bei der zweiten pneumatischen Verbrauchergruppe hingegen um ein beliebiges anderes pneumatisch betriebenes Aggregat mit demgegenüber erhöhtem Druckluftverbrauch, jedoch geringeren Anforderungen an die Feuchtefreiheit der zugeführten Druckluft handeln. Beispielhaft sei hier eine extern über eine Druckluftkupplung anschließbare Ausblaspistole, eine Reifendruckregelanlage oder auch pneumatische betriebene Arbeitsaggregate von an dem landwirtschaftlichen Traktor anbringbaren Anbau- oder Zusatzgeräten genannt. Im Gegensatz zur ersten pneumatischen Verbrauchergruppe werden bei letzterer an die Entfeuchtungsleistung des Lufttrockners keine allzu hohen Anforderungen gestellt, sodass dieser trotz der gewünschten erhöhten Durchflussleistung baulich vergleichsweise kompakt ausfallen kann.

Vorliegend wird unter der Durchflussleistung des ersten bzw. zweiten Lufttrockners dessen nominelle (also maximal mögliche) Durchflussrate, unter dessen Entfeuchtungsleistung der erzielbare Entfeuchtungsgrad des hindurchtretenden Luftstroms verstanden.

Vorteilhafte Weiterbildungen der erfindungsgemäßen pneumatische Versorgungseinrichtung gehen aus den Unteransprüchen hervor.

Vorzugsweise wird der gekühlte Luftstrom aufgeteilt und dem ersten und zweiten Lufttrockner parallel zugeführt. Bei dieser Ausführungsform der pneumatischen Versorgungseinrichtung kann für jede der beiden pneumatischen Verbrauchergruppen jeweils ein hinsichtlich Entfeuchtungs- und Durchflussleistung optimierter Lufttrockner vorgesehen sein.

Entsprechend einer weiteren Ausführungsform der pneumatischen Versorgungseinrichtung ist es auch denkbar, dass der gekühlte Luftstrom zunächst durch den zweiten Lufttrockner hindurchtritt und danach zur Versorgung der zweiten pneumatischen Verbrauchergruppe sowie des ersten Lufttrockners aufgeteilt wird. Der zweite Lufttrockner dient insofern als Vortrockner für den ersten Lufttrockner, wobei letzterer aufgrund der dann zu erbringenden verringerten Entfeuchtungsleistung baulich entsprechend kompakter ausfallen kann. Die Durchflussleistung des zweiten Lufttrockners bzw. Vortrockners wird derart gewählt, dass diese den Gesamtdruckluftverbrauch der beiden pneumatischen Verbrauchergruppen verlässlich abdeckt.

Um eine Luftdruckversorgung der ersten pneumatischen Verbrauchergruppe zu priorisieren, kann zudem vorgesehen sein, dass die Druckluftbeaufschlagung der zweiten pneumatischen Verbrauchergruppe über ein vorgeschaltetes Druckschaltventil erfolgt, wobei das Druckschaltventil bei Unterschreiten eines vorgegebenen Versorgungsdrucks eine geschlossene Stellung einnimmt, sodass der gekühlte Luftstrom ausschließlich der ersten pneumatischen Verbrauchergruppe zur Verfügung steht. Dies ist insbesondere dann von Bedeutung, wenn es sich bei der ersten pneumatischen Verbrauchergruppe um eine durch eine pneumatische Radbremseinrichtung gebildete Bremsanlage eines an dem landwirtschaftlichen Traktor anbringbaren Anhängers handelt, deren einwandfreier Betrieb stets Vorrang hat ist.

Die erfindungsgemäße pneumatische Versorgungseinrichtung für einen landwirtschaftlichen Traktor wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein schematisch dargestelltes Blockschaltbild eines ersten Ausführungsbeispiels der pneumatischen Versorgungseinrichtung, und
- Fig. 2: ein schematisch dargestelltes Blockschaltbild eines zweiten Ausführungsbeispiels der pneumatischen Versorgungseinrichtung.

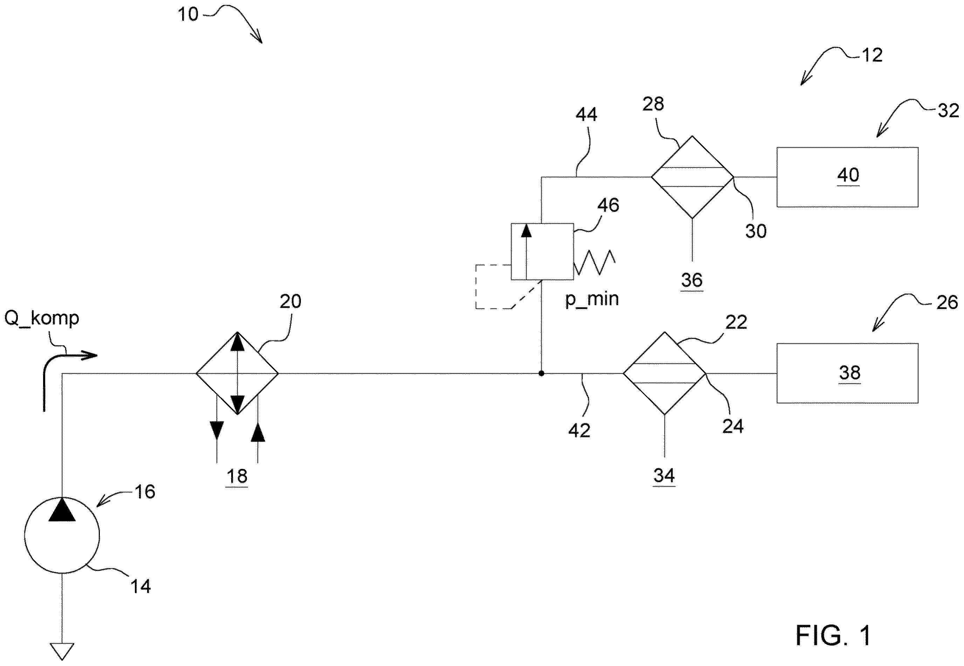

Fig. 1 zeigt ein schematisch dargestelltes Blockschaltbild eines ersten Ausführungsbeispiels der pneumatischen Versorgungseinrichtung.

Die in einem nicht näher wiedergegebenen landwirtschaftlichen Traktor 10 untergebrachte pneumatische Versorgungseinrichtung 12 umfasst eine als Kompressor 14 ausgebildete Druckluftquelle 16 zur Erzeugung eines komprimierten Luftstroms Q_komp, einen an einem Flüssigkeitskühlkreislauf 18 angeschlossenen Kühler 20 zur Kühlung des erzeugten Luftstroms Q_komp, sowie einen mit dem gekühlten Luftstrom Q_komp gespeisten ersten Lufttrockner 22, über dessen Auslass 24 eine erste pneumatische Verbrauchergruppe 26 mit entfeuchteter Druckluft entsprechend einer ersten Entfeuchtungs- und Durchflussleistung beaufschlagt wird, und einen mit dem gekühlten Luftstrom Q_komp gespeisten zweiten Lufttrockner 28, über dessen Auslass 30 eine zweite pneumatische Verbrauchergruppe 32 mit entfeuchteter Druckluft entsprechend einer zweiten Entfeuchtungs- und Durchflussleistung beaufschlagt wird. Die dem Kühler 20 nachgeschalteten Lufttrockner 22, 28 dienen hierbei jeweils der Abscheidung des beim Abkühlen des kompressionsbedingt erwärmten Luftstroms Q_komp entstehenden Kondensats, wobei dieses über einen jeweils zugehörigen Drainageanschluss 34, 36 abgeführt wird. Hierbei sei angemerkt, dass der Kühler 20 nicht notwendigerweise als aktiver Flüssigkeits-Luft-Kühler, sondern auch als passiver (auf Konvektion beruhender) oder aktiver Luft-Luft-Kühler ausgebildet sein kann.

Beispielsgemäß handelt es sich bei der ersten pneumatischen Verbrauchergruppe 26 um eine pneumatische Radbremseinrichtung 38 eines an dem landwirtschaftlichen Traktor 10 anbringbaren Anhängers, bei der zweiten pneumatischen Verbrauchergruppe 32 hingegen um ein beliebiges anderes pneumatisch betriebenes Aggregat 40 mit demgegenüber erhöhtem Druckluftverbrauch, jedoch geringeren Anforderungen an die Feuchtefreiheit der zugeführten Druckluft. Beispielhaft sei hier eine extern über eine Druckluftkupplung anschließbare Ausblaspistole, eine Reifendruckregelanlage oder auch pneumatische betriebene Arbeitsaggregate von an dem landwirtschaftlichen Traktor 10 anbringbaren Anbau- oder Zusatzgeräten genannt.

Gemäß der in Fig. 1 wiedergegebenen Ausführungsform der pneumatischen Versorgungseinrichtung 12 wird der gekühlte Luftstrom Q_komp aufgeteilt und dem ersten und zweiten Lufttrockner 22, 28 über zugehörige erste und zweite Versorgungsleitungen 42, 44 parallel zugeführt. Hierbei ist für jede der beiden pneumatischen Verbrauchergruppen 26, 32 jeweils ein hinsichtlich Entfeuchtungs- und Durchflussleistung optimierter Lufttrockner 22, 28 vorgesehen.

Um eine Luftdruckversorgung der ersten pneumatischen Verbrauchergruppe 26 zu priorisieren, erfolgt die Druckluftbeaufschlagung der zweiten pneumatischen Verbrauchergruppe 32 über ein dem zweiten Lufttrockner 28 in der zweiten Versorgungsleitung 44 vorgeschaltetes Druckschaltventil 46. Abweichend davon kann sich das Druckschaltventil 46 auch in der zweiten Versorgungsleitung 44 zwischen dem zweiten Lufttrockner 28 und der zweiten pneumatischen Verbrauchergruppe 32 befinden. Das Druckschaltventil 46 nimmt bei Unterschreiten eines vorgegebenen Versorgungsdrucks p_min eine geschlossene Stellung ein, sodass der gekühlte Luftstrom Q_komp ausschließlich der ersten pneumatischen Verbrauchergruppe 26 zur Verfügung steht. Dies ist insbesondere dann von Bedeutung, wenn es sich wie hier bei der ersten pneumatischen Verbrauchergruppe 26 um eine durch die pneumatische Radbremseinrichtung 38 gebildete Bremsanlage handelt, deren einwandfreier Betrieb stets Vorrang hat.

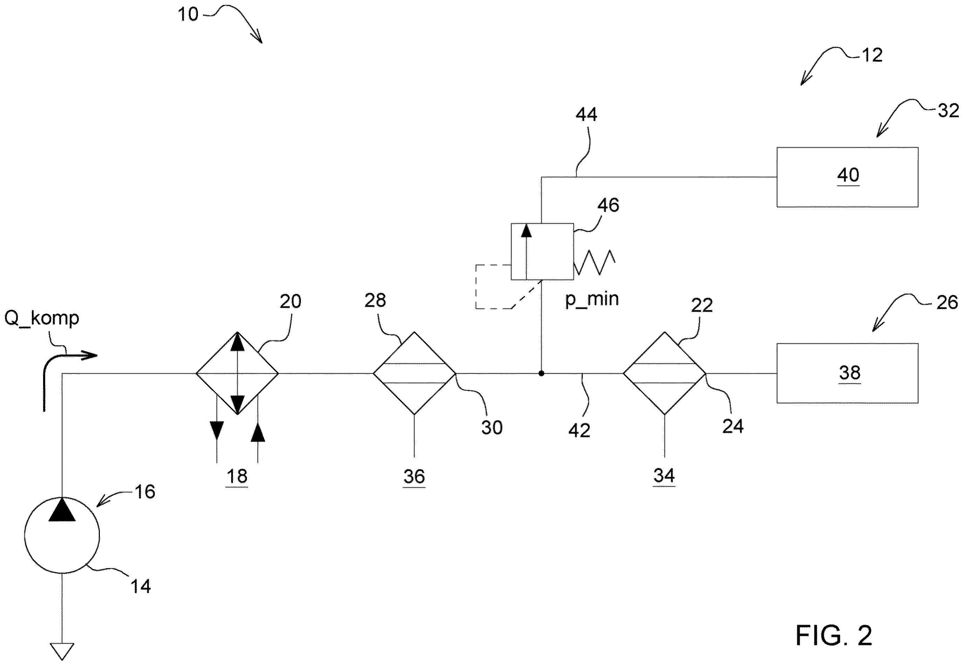

Fig. 2 zeigt ein schematisch dargestelltes Blockschaltbild eines zweiten Ausführungsbeispiels der pneumatischen Versorgungseinrichtung.

Wie zu erkennen ist, tritt bei dieser weiteren Ausführungsform der pneumatischen Versorgungseinrichtung 12 der vom Kühler 20 kommende gekühlte Luftstrom Q_komp zunächst durch den zweiten Lufttrockner 28 hindurch, um danach zur Versorgung der zweiten pneumatischen Verbrauchergruppe 32 sowie des ersten Lufttrockners 22 aufgeteilt zu werden. Der zweite Lufttrockner 28 dient insofern als Vortrockner für den in der ersten Versorgungsleitung 42 liegenden ersten Lufttrockner 22. Die Durchflussleistung des zweiten Lufttrockners 28 bzw. dadurch gebildeten Vortrockners wird derart gewählt, dass diese den Gesamtdruckluftverbrauch der beiden pneumatischen Verbrauchergruppen 26, 32 verlässlich abdeckt. Das Druckschaltventil 46 ist hierbei in der zweiten Versorgungsleitung 44 zwischen dem zweiten Lufttrockner 28 und der zweiten pneumatischen Verbrauchergruppe 32 angeordnet.

## Patentansprüche

1. Pneumatische Versorgungseinrichtung für einen landwirtschaftlichen Traktor, umfassend eine Druckluftquelle (16) zur Erzeugung eines komprimierten Luftstroms (Q_komp), einen Kühler (20) zur Kühlung des erzeugten Luftstroms (Q_komp), sowie einen mit dem gekühlten Luftstrom (Q_komp )gespeisten ersten Lufttrockner (22), über dessen Auslass (24) eine erste pneumatische Verbrauchergruppe (26) mit entfeuchteter Druckluft entsprechend einer ersten Entfeuchtungs- und Durchflussleistung beaufschlagbar ist, und einen mit dem gekühlten Luftstrom (Q_komp) gespeisten zweiten Lufttrockner (28), über dessen Auslass (30) eine zweite pneumatische Verbrauchergruppe (32) mit entfeuchteter Druckluft entsprechend einer zweiten Entfeuchtungs- und Durchflussleistung beaufschlagbar ist.

2. Pneumatische Versorgungseinrichtung nach Anspruch 1, **dadurch gekennzeichnet, dass** der gekühlte Luftstrom (Q_komp) aufgeteilt und dem ersten und zweiten Lufttrockner (22, 28) parallel zugeführt wird.

3. Pneumatische Versorgungseinrichtung nach Anspruch 1, **dadurch gekennzeichnet, dass** der gekühlte Luftstrom (Q_komp) zunächst durch den zweiten Lufttrockner (28) hindurchtritt und danach zur Versorgung der zweiten pneumatischen Verbrauchergruppe (32) sowie des ersten Lufttrockners (22) aufgeteilt wird.

4. Pneumatische Versorgungseinrichtung nach wenigstens einem der vorhergehenden Ansprüche, **dadurch gekennzeichnet, dass** die Druckluftbeaufschlagung der zweiten pneumatischen Verbrauchergruppe (32) über ein vorgeschaltetes Druckschaltventil (46) erfolgt, wobei das Druckschaltventil (46) bei Unterschreiten eines vorgegebenen Versorgungsdrucks (p_min) eine geschlossene Stellung einnimmt, sodass der gekühlte Luftstrom (Q_komp) ausschließlich der ersten pneumatischen Verbrauchergruppe (26) zur Verfügung steht.
